# FASCICULE DE BREVET EUROPEEN

(11) **EP 3 317 159 B1**
(45) Date de publication et mention de la délivrance du brevet: **30.10.2019**
(21) Numéro de dépôt: 16733434.1
(22) Date de dépôt: 27.06.2016
(51) Int. Cl.: B62B 7/06

(54) **DOUBLE PEDALE DE PLIAGE DE POUSSETTE**
DOPPELPEDAL ZUM ZUSAMMENKLAPPEN EINES KINDERWAGENS
DOUBLE PEDAL FOR FOLDING A PUSHCHAIR

(30) Priorité: 03.07.2015 FR 1556320
(43) Date de publication de la demande: 09.05.2018
(73) Titulaire: Dorel France, 49309 Cholet Cedex (FR)
(72) Inventeur: BONDU, Gilles, 49100 Angers (FR); BRIAND, Yannis, 35000 Rennes (FR); WU, Tse-Chien, Kaohsiung City 800 (TW)
(74) Mandataire: Vidon Brevets & Stratégie
(86) Numéro de dépôt international: PCT/EP2016/064775
(87) Numéro de publication internationale: WO 2017/005516

(56) Documents cités:
- DE-U1- 20 113 302
- DE-U1-202008 003 410
- FR-A1- 2 394 435
- US-A1- 2008 315 562

## Description

### 1. Domaine de l'invention

Le domaine de l'invention est celui de la puériculture. Plus précisément, l'invention concerne les poussettes, ou voitures d'enfant, et en particulier le pliage de telles poussettes.

Plus précisément encore, l'invention concerne les mécanismes de commande du pliage des poussettes.

### 2. L'art antérieur

Les poussettes, ou voitures d'enfant, comprennent généralement un châssis, sur lequel est monté, de façon fixe ou amovible, un hamac, ou, le cas échéant, un autre dispositif de transport d'enfants (nacelle, coque, ...).

Ces châssis sont généralement pliables, et peuvent donc prendre au moins une position dépliée, dans laquelle la poussette peut recevoir un enfant, et au moins une position pliée pour permettre un rangement de la poussette avec un encombrement réduit.

On connaît déjà de très nombreuses techniques de commande du pliage de poussette. D'une façon générale, on cherche notamment à concilier au moins certains des objectifs suivants :
- sécurité de l'enfant transporté et notamment contrôle du pliage (pour lutter contre un pliage non souhaité, en particulier en présence d'un enfant) ;
- simplicité des manipulations de pliage et dépliage, l'utilisateur devant pouvoir effectuer ces opérations avec un nombre réduit d'opérations, et chacune de ces opérations devant être le plus facile possible ;
- simplicité et faible coût de la fabrication.

On connaît dans l'état de la technique de nombreuses approches permettant de remplir certains de ces objectifs. D'une façon générale, des doubles commandes sont prévues, pour éviter un actionnement intempestif, et éviter un pliage non souhaité.

Un exemple est un tel dispositif de commande du pliage qui met en œuvre des organes de déverrouillage prévus au voisinage de la poignée du châssis, et dont l'un est relié à un mécanisme de déverrouillage par un câble métallique de transmission. Document FR2394435 décrit une poussette avec des moyens de commande du déverrouillage comprennent un organe d'actionnement au pied situé dans la région inférieure du châssis.

### 3. Objectifs de l'invention

L'invention a notamment pour objectif de pallier ces inconvénients de l'art antérieur.

Plus précisément, un objectif de l'invention est, selon au moins un mode de réalisation, de fournir une poussette mettant en œuvre de façon simple et efficace un mécanisme de pliage et qui présente de bonnes qualités de sécurité pour l'enfant transporté.

L'invention a également pour objectif de fournir une telle poussette, qui soit simple et peu coûteuse à mettre en œuvre, au moins en ce qui concerne les aspects liés au mécanisme de pliage.

L'invention a également pour objectif, selon au moins un mode de réalisation, de fournir un mécanisme de pliage qui soit simple robuste, et qui ne peut être actionné de manière intempestive.

### 4. Caractéristiques essentielles de l'invention

Ces objectifs, ainsi que d'autres qui apparaîtront plus clairement par la suite, sont atteints à l'aide d'une poussette comprenant un châssis muni de roues pouvant adopter une positon déployée correspondant à une position d'utilisation de la poussette et une position repliée correspondant à une position de rangement de la poussette, la poussette comprenant en outre des moyens de verrouillage du châssis en positon déployée et des moyens de commande du déverrouillage des moyens de verrouillage permettant ainsi de ramener le châssis dans ladite position de rangement.

Selon l'invention, les moyens de commande du déverrouillage comprennent un organe d'actionnement au pied situé dans la région inférieure du châssis et un élément de sécurité mobile configuré pour empêcher l'accès à l'organe d'actionnement dans une première positon, dite de sécurité, et pour permettre l'accès à l'organe d'actionnement dans une deuxième positon, dite de libération.

L'invention propose ainsi un mécanisme de pliage d'une poussette pour enfant qui ne peut être actionné de manière intempestive et qui présente de bonnes qualités de sécurité pour l'enfant transporté.

Pour ce faire, la poussette met en œuvre un organe d'actionnement au pied (une pédale, par exemple) apte à déverrouiller le pliage de la poussette et un élément de sécurité supplémentaire, lui aussi actionnable par le pied de l'utilisateur.

Plus précisément, dans une position abaissée (position de sécurité), l'élément de sécurité est configuré pour empêcher l'accès à l'organe d'actionnement, et dans une position relevée (position de libération), pour permettre l'accès à l'organe d'actionnement.

Le passage de la position de abaissée vers la position relevée de l'élément de sécurité est obtenu par une simple action de l'utilisateur avec le dessus de son pied. Une fois libérée, il suffit à l'utilisateur d'appuyer avec le même pied sur l'organe d'actionnement pour déverrouiller le pliage de la poussette.

Selon un aspect particulier de l'invention, le passage de la position de sécurité vers la position de libération peut être effectuée par une action de l'utilisateur avec son pied.

Un utilisateur peut ainsi plier la poussette avec une double action du pied.

Selon un autre aspect particulier de l'invention, ledit élément de sécurité et ledit organe d'actionnement sont configurés et assemblés de façon que l'utilisateur puisse, dans une même séquence de mouvement d'un pied, déplacer ledit élément de sécurité de la position de sécurité vers la position de libération, puis agir sur ledit organe d'actionnement pour commander le déverrouillage.

Ceci limite les manipulations et facilite le pliage.

Selon un aspect particulier de l'invention, l'organe d'actionnement et/ou l'élément de sécurité sont montés pivotant sur le châssis.

Selon un autre aspect particulier de l'invention, l'élément de sécurité est monté de façon à passer de la position de libération à la position de sécurité sous l'effet de la gravité.

Selon encore un autre aspect particulier de l'invention, l'élément de sécurité recouvre au moins essentiellement l'organe d'actionnement dans la position de sécurité.

Un tel aspect permet de s'assurer et d'éviter que l'organe d'actionnement ne soit activé de manière intempestive ou non souhaitée.

Selon un aspect particulier de l'invention, l'organe d'actionnement est apte à agir sur un câble relié à au moins un premier élément mobile de verrouillage du châssis.

Selon un aspect particulier de l'invention, l'organe d'actionnement est apte à agir sur au moins un deuxième élément mobile de verrouillage du châssis coopérant avec au moins un élément commandant le pliage des roues arrière du châssis.

Selon un autre aspect particulier de l'invention, l'organe d'actionnement est solidaire de moyens élastiques pour rappeler l'organe d'actionnement vers une position de repos.

De tels moyens élastiques permettent un retour en position de repos de l'organe d'actionnment sans qu'aucune action de l'utilisateur ne soit nécessaire.

Selon encore un autre aspect particulier de l'invention, l'organe d'actionnement au pied est une pédale comprenant une surface d'appui du pied de l'utilisateur.

### 5. Liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :
- les figures 1A et 1B illustrent, en perspective, une poussette selon l'invention, en position dépliée ;
- la figure 2 est une vue de détail d'une partie de la poussette des figures 1A et 1B ;
- les figures 3A et 3B illustrent de façon schématique la cinématique de pliage de la poussette conforme à l'invention ;
- les figures 4A et 4B sont des vues de détail du mécanisme de pliage des blocs de roues arrière de la poussette conforme à l'invention ;
- les figures 5A et 5B sont des vues de détail d'une partie de la poussette conforme à l'invention, en position dépliée et repliée respectivement ;
- la figure 6 est une vue arrière de la poussette montrant les moyens de commande du déverrouillage du châssis conformes à l'invention ;
- la figure 7 est une vue en coupe montrant les moyens de commande du déverrouillage du châssis conformes à l'invention ;
- la figure 8A est une vue de détail schématique des moyens de commande du déverrouillage du châssis conformes à l'invention ;
- les figures 8B à 8D sont des vues en coupe partielle montrant le processus d'actionnement à l'aide du pied des moyens de commande du déverrouillage du châssis conformes à l'invention ;
- la figure 9 est une vue de détail des premiers éléments de verrouillage du châssis de la poussette de l'invention en position dépliée ;
- la figure 10 est une vue de dessous de la poussette montrant les moyens de commande du déverrouillage du châssis conformes à l'invention.

### 6. Description d'un mode de réalisation de l'invention

### 6.1 Principe général

Comme précisé plus haut, l'invention concerne donc la mise en œuvre d'un mécanisme de pliage pour une poussette à pliage en trois dimensions, un tel mécanisme mettant en œuvre une pédale de déverrouillage du châssis en position dépliée, permettant le pliage, qui comprend un élément de sécurité supplémentaire, lui aussi actionnable par le pied de l'utilisateur.

### 6.2 Exemple de châssis de poussette

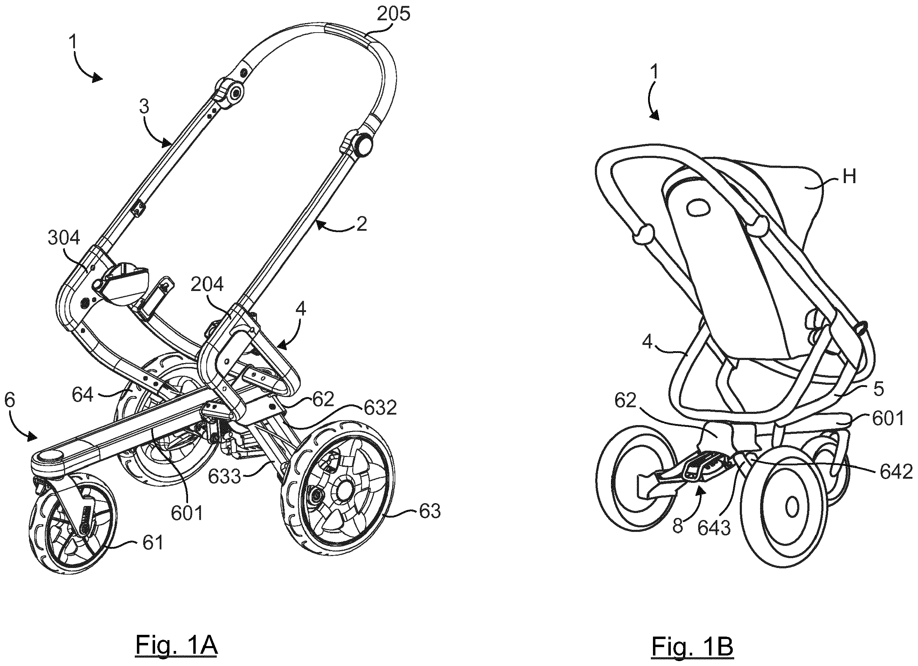

Les figures 1A et 1B présentent un exemple de châssis pliant d'une poussette sur lequel peut être monté un hamac H notamment qui, pour des raisons de clarté, est uniquement illustré sur la figure 1B.

De façon générale, le châssis pliant 1 comprend une portion, ou partie, supérieure 2, 3, 4, 5 et une portion, ou partie, inférieure 6 présentant une poutre centrale 601. La poutre centrale 601 présente, sur sa partie avant, un bloc de roue avant 61, et sur sa partie arrière, deux blocs de roues arrière 63, 64 situés de part et d'autre de la poutre centrale 601.

La portion supérieure du châssis comprend ici un arceau avant 5 et un arceau arrière 4 reliés chacun, de manière articulée, à la poutre centrale 601. Les arceaux 4, 5 sont parallèles entre eux dans la position dépliée de la poussette des figures 1A et 1B. Les arceaux 4 et 5 sont en outre reliés, de manière articulée, à un poussoir constitué d'un montant droit 2 et d'un montant gauche 3. Ces montants 2, 3 sont reliées à leur extrémité supérieure par une barre de poussée, ou poignée, 205.

L'extrémité inférieure des montants 2, 3 est montée fixe à un élément de liaison, ou embase, 204, 304 respectivement.

L'extrémité arrière de la poutre centrale 601 comprend un socle 62 sur lequel sont montés articulés les deux blocs de roues arrières 63 et 64 par l'intermédiaire d'un ensemble de deux bras 632, 633, 642, 643 respectivement.

Plus précisément, les deux blocs de roues arrières 63 et 64 sont reliés au socle 62 à l'aide d'articulations (non visibles sur les figures) solidaires du socle 62 qui permettent le pivotement des bras 632, 633, 642, 643 en direction de la poutre centrale 601 lorsque la poussette est pliée, et inversement.

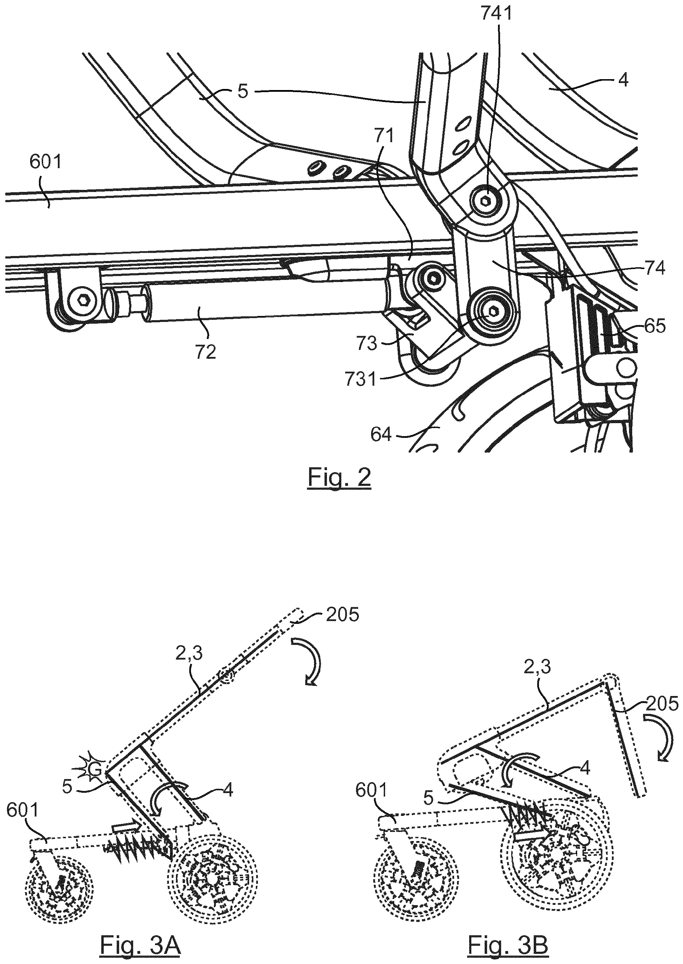

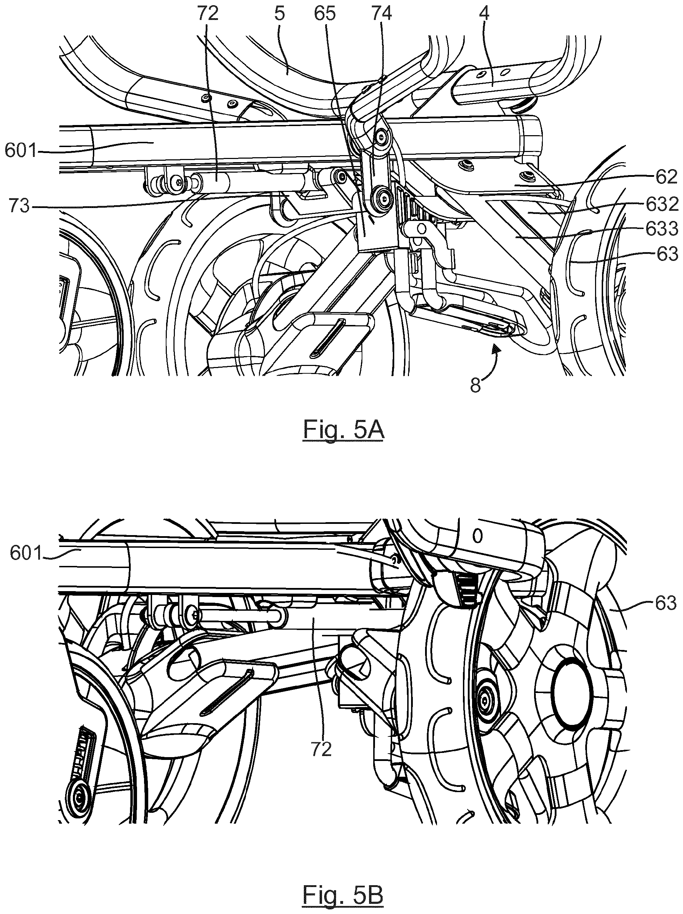

Comme illustré sur les figures 2 et 5A, l'arceau avant 5 est relié de manière articulée à un élément coulissant 71 permettant le pliage des blocs de roues arrière 63, 64. L'élément coulissant 71 s'étend sur le dessous de la poutre centrale 601, parallèlement à l'axe longitudinal de cette dernière, et est monté mobile en translation sur le socle 62 à une première extrémité.

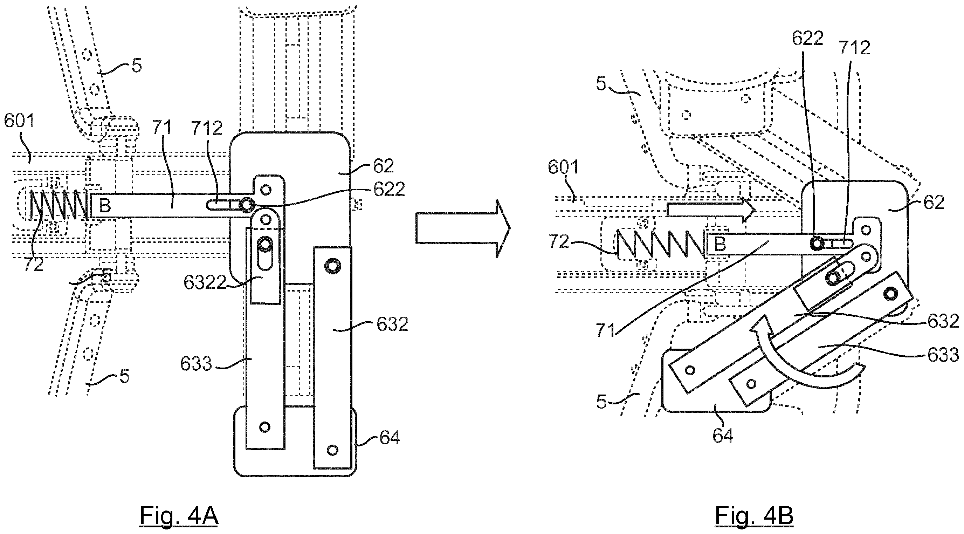

Comme illustré sur les figures 4A et 4B, l'élément coulissant 71 comprend une lumière oblongue 712 s'étendant selon l'axe longitudinal de la poutre centrale 601, à proximité du socle 62. Cette lumière 712 est configurée pour coopérer avec un pion 622 de guidage du coulissement solidaire du socle 62 et permettre ainsi le déplacement en translation de l'élément coulissant 71 par rapport au socle 62. On note que les bras 632, 633, 642, 643 des deux blocs de roues arrière 63 et 64 sont montés pivotants sur le socle 62. Lorsque l'élément coulissant 71 se déplace vers l'arrière de la poussette (vers les roues arrière), le pion 622 vient en butée déplacement contre l'extrémité avant de la lumière 712, ce qui provoque le déplacement du socle 62 vers l'arrière et le pivotement des blocs de roues 63 et 64 vers l'avant (et vers la poutre centrale 601).

La deuxième extrémité de l'élément coulissant 71 est solidaire d'un élément 72 d'assistance au pliage qui est, par exemple, un ressort ou un piston à gaz ou à air (tout autre élément permettant d'obtenir un résultat similaire peut être mis en œuvre). L'élément 72 d'assistance au pliage s'étend selon l'axe longitudinal de la poutre centrale 601 et est solidaire à une extrémité de cette dernière. Cette deuxième extrémité de l'élément coulissant 71 est également solidaire d'une mâchoire 73 de forme sensiblement en U.

La mâchoire 73 est montée articulée par rapport à l'élément coulissant 71 et s'étend de part et d'autre de la poutre centrale 601 selon un axe perpendiculaire à l'axe longitudinal de la poutre centrale 601.

La mâchoire 73 est en outre solidaire d'une première extrémité d'un levier, ou bielle, 74 par le biais d'une articulation 731, le levier 74 étant reliée à la poutre centrale 601 et à l'arceau avant 5 par le biais d'une articulation 741 (visible sur la figure 2).

Le châssis 1 comprend, en outre, des moyens de verrouillage du châssis 1 dans sa position dépliée. Les moyens de verrouillage du châssis 1 sont prévus pour éviter le pliage intempestif du châssis 1 de la poussette. Ils peuvent être conçus pour que le verrouillage soit automatique, en fin de dépliage.

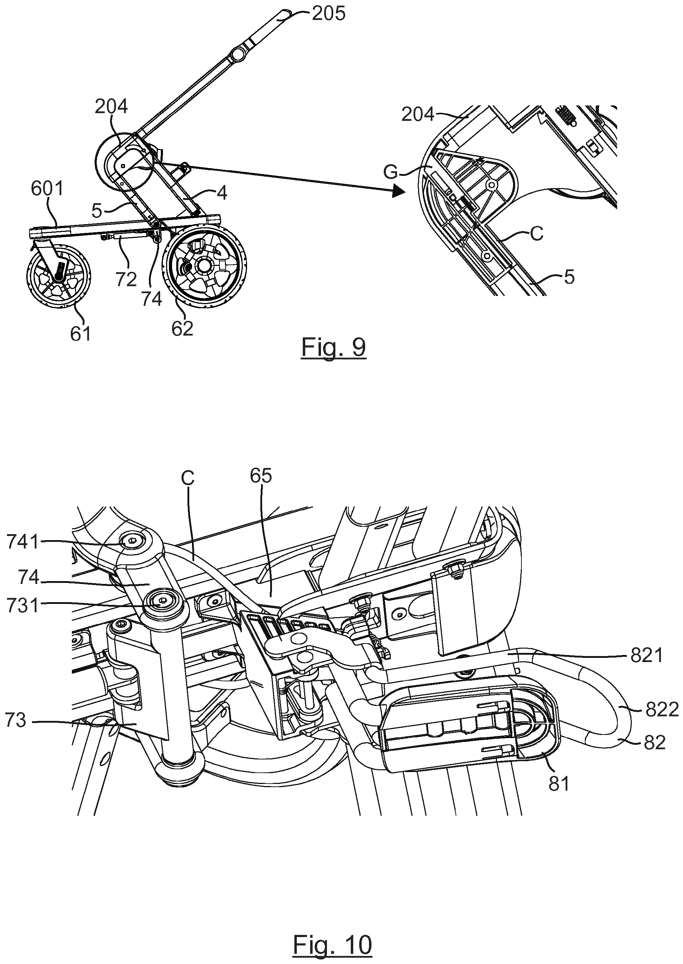

Dans le mode de réalisation illustré sur les figures 3A, 3B et 9, un premier élément de verrouillage G est situé dans l'embase 204, 304 et verrouille l'articulation reliant l'arceau avant à l'embase (et donc aux montants 2,3), empêchant ainsi le mouvement de l'arceau avant 5, et donc de l'ensemble du châssis 1.

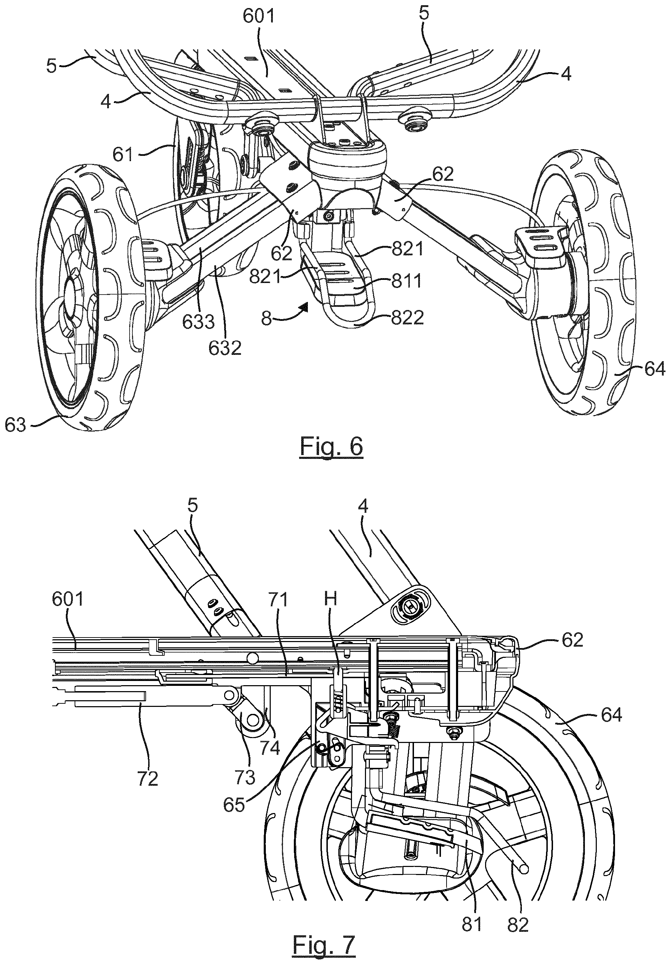

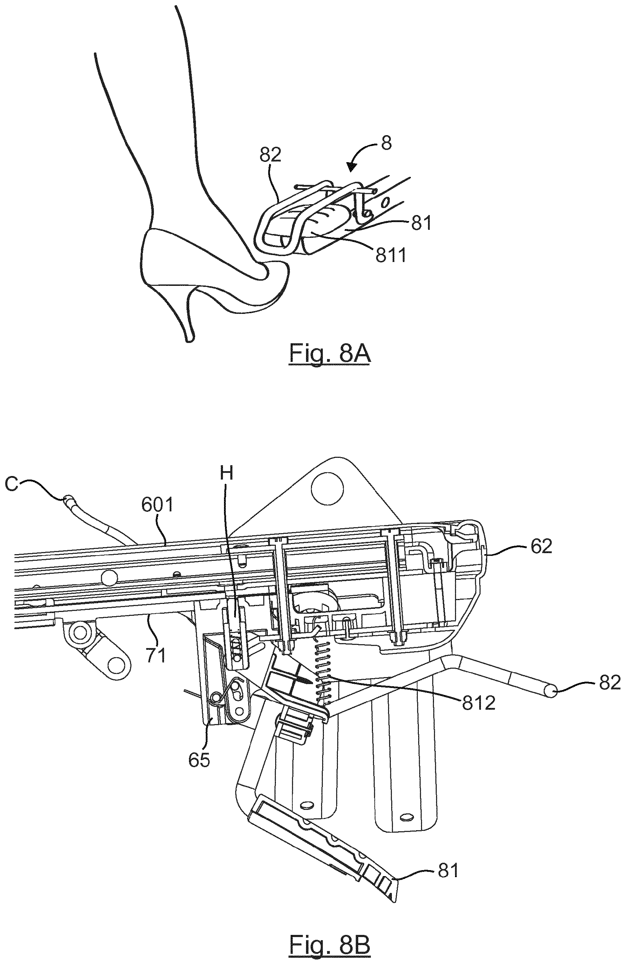

Un deuxième élément de verrouillage H est monté mobile dans la poutre centrale 601 et verrouille le coulissement de l'élément coulissant 71 (figures 7 et 8B à 8D).

Le système de verrouillage du châssis 1 comprend des moyens de commande du déverrouillage 8 sous la forme d'une pédale 81 et d'un élément de sécurité 82 supplémentaire situés sur le dessous de la poutre centrale 601 (figures 5A, 8A à 8D et 10) et agissant sur chacun des éléments de verrouillage G et H.

Dans le mode de réalisation illustré, l'élément de sécurité 82 se présente sous la forme d'un fil métallique rigide, suivant sensiblement les contours de la pédale 81, au dessus de celle-ci, et replié vers le bas au-delà de la pédale, de façon à en empêcher un accès, dans la position de sécurité, et à faciliter sa manipulation de la pointe du pied et/ou de la partie supérieure du pied.

Le châssis 1 étant déplié, l'élément de verrouillage H coopère avec l'élément coulissant 71 (figure 7), et le piston 72 est escamoté (figures 2 et 5A). Lorsque l'élément de verrouillage H n'est plus en contact avec l'élément coulissant 71, le piston 72 se déploie (figure 5B) et entraîne le coulissement de l'élément coulissant 71 (figures 8B à 8D).

La cinématique de pliage du châssis 1 se décompose essentiellement de la manière suivante :
- les moyens de verrouillage G, H sont déverrouillés à l'aide de la pédale 81 de manière à libérer notamment le mouvement de l'articulation entre l'arceau avant 5 et les montants 2, 3 et le coulissement de l'élément coulissant 71 sous l'effet du piston 72 (et donc le pivotement de la mâchoire 73) ;
- le pliage est amorcé en pivotant les montants 2, 3 vers le bas ;
- les embases 204, 304 pivotent et entrainent en rotation les arceaux avant 5 et arrière 4 ;
- le coulissement de l'élément coulissant 71 amorce le rapprochement des blocs de roues arrière 63, 64 dans les trois directions ;
- les montants 2, 3 sont pivotés vers les blocs de roues arrière 63, 64 jusqu'au pliage complet de la poussette.

Lors du dépliage, l'utilisateur tire les montants 2, 3 vers le haut.

Il est possible, en toute fin de pliage, de faire pivoter manuellement la poignée 205, vers les blocs de roues arrière 63, 64, de manière à optimiser davantage le volume de la poussette dans sa position pliée.

### 6.3 Moyens de commande du déverrouillage du châssis

Les moyens de commande du déverrouillage 8, qui comprennent une pédale 81 de manoeuvre et un élément, ou levier, de sécurité 82 supplémentaire, sont montés articulés sur la poutre centrale 601, entre les deux blocs de roues arrière 63, 64. Ils présentent un encombrement réduit et peuvent être actionnés facilement. Dans ce mode de réalisation, ils sont montés pivotant sur un bloc support 65 fixé sur le dessous de la poutre centrale 601.

La pédale 81 comprend une surface d'appui 811 (visible sur les figures 2A et 6) du pied de l'utilisateur et une partie de liaison à un câble C relié au premier élément de verrouillage G.

Un moyen de rappel élastique de la pédale 81, prenant la forme dans cet exemple d'un ressort 812, est monté entre la poutre centrale 601 et la pédale 81. L'utilisateur peut déplacer la pédale 81 à l'encontre du ressort 812 par un simple appui du pied sur la surface d'appui 811 de cette pédale 81.

Le levier de sécurité 82 est monté au-dessus de la pédale 81 empêchant l'accès à cette dernière. Le levier de sécurité 82 présente ici une première portion 821 formée de deux branches parallèles montées articulées et prolongées par une deuxième portion 822 en U, comme illustré sur les figures 6 et 10. Le levier de sécurité 82 permet lorsqu'il est soulevé, d'autoriser l'actionnement de la pédale 81. Un tel levier pourrait, dans une variante, prendre la forme d'un cache.

Le processus de pliage de la poussette s'effectue en deux étapes, accentuant ainsi la sécurité de la poussette.

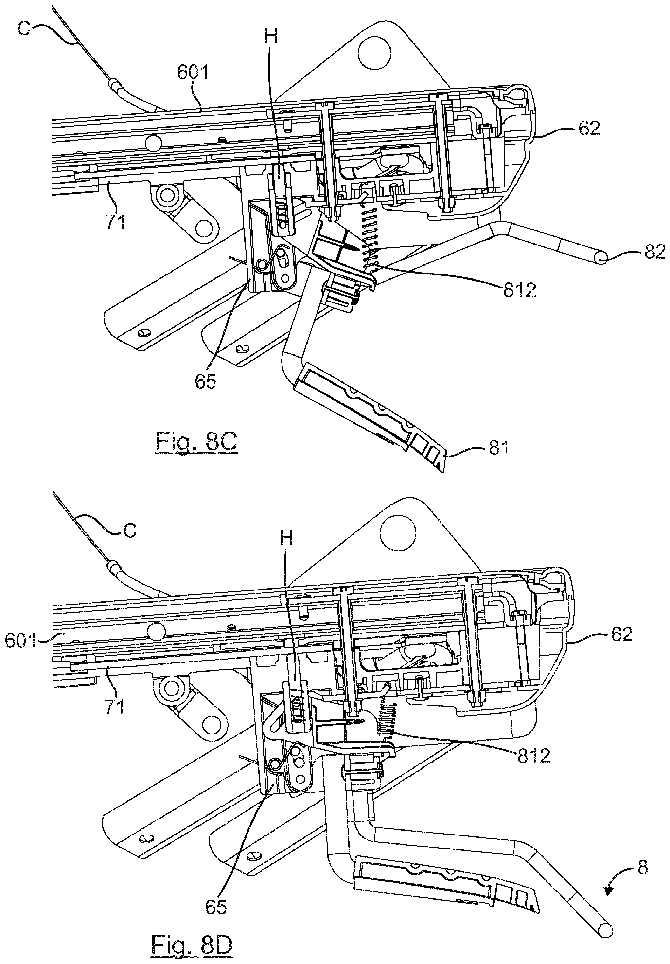

Lorque l'utilisateur souhaite replier le châssis 1 pour mettre la poussette en positon de rangement, il lui suffit de relever le levier de sécurité 82 à l'aide du pied vers le haut (comme illustré par les flèches sur la figure 8A), puis d'exercer une pression vers le bas sur la pédale 81 à l'aide du même pied (comme illustré par la flèche sur la figure 8A) pour ainsi faire pivoter la pédale 81 jusque dans la position illustrée sur la figure 8C, ceci à l'encontre de la force de rappel exercée par le ressort 812.

On rappelle que sur ce châssis 1, un premier élément de verrouillage G est situé dans l'embase 204, 304 et verrouille l'articulation empêchant ainsi le mouvement de l'arceau avant 5, et donc de l'ensemble du châssis 1.

On rappelle également qu'un deuxième élément de verrouillage H est monté mobile dans la poutre centrale 601 et verrouille le coulissement de l'élément coulissant 71.

L'abaissement de la pédale 81 agit :
- sur le câble C relié au premier élément de verrouillage G, ces deux éléments C et G se déplaçant vers le bas (c'est-à-dire vers le sol ou les blocs de roues), et
- sur le deuxième élément de verrouillage H qui se déplace vers le bas et libère ainsi le coulissement de l'élément coulissant 71 vers les blocs de roues arrière sous l'effet du piston 72.

Les éléments de verrouillage G, H étant libérés/déverrouillés, le pliage de la poussette peut être amorcé selon les étapes précédemment décrites.

Dès que l'utilisateur retire son pied de la pédale 81, cette dernière se relève sous l'action du ressort 812 et reprend sa position initiale (figure 8D).

Lorsque la poussette doit être amenée de sa positon repliée à sa position déployée, l'utilisateur tire les montants 2, 3 vers le haut.

Il est à noter que cette approche peut aisément être adaptée à d'autres poussettes à pliage en deux ou trois dimensions.

Un avantage de la présente invention est que les moyens de commande du déverrouillage forment une double sécurité visant à prévenir un pliage non souhaité de la poussette. En effet, la pédale 81 commandant le pliage du châssis ne peut être activée sans avoir préalablement soulevé l'élément de sécurité 82 supplémentaire.

La présente invention permet donc à l'utilisateur de commander aisément le pliage du châssis avec son pied, et avec un nombre de manipulations réduit.

L'invention ne nécessite pas l'ajout d'une commande additionnelle déportée, comme un bouton situé sur la poignée par exemple.

On note, en outre, que la présente invention n'est nullement limitée à la forme de réalisation décrite et représentée.

## Revendications

1. Poussette comprenant un châssis (1) muni de roues (61, 62, 63), pouvant adopter au moins une positon déployée correspondant à une position d'utilisation de la poussette et au moins une position repliée correspondant à une position de rangement de la poussette, la poussette comprenant en outre des moyens de verrouillage du châssis (1) en position déployée et des moyens de commande du déverrouillage des moyens de verrouillage permettant ainsi de ramener la châssis (1) dans ladite position de rangement les moyens de commande du déverrouillage comprennent un organe d'actionnement (81) au pied situé dans la région inférieure du châssis (1), **caractérisée en ce que** les moyens de commande du déverrouillage comprennent un élément de sécurité (82) mobile configuré pour empêcher l'accès à l'organe d'actionnement (81) dans une première position, dite de sécurité, et pour permettre l'accès à l'organe d'actionnement (81) dans une deuxième position, dite de libération.

2. Poussette selon la revendication 1, **caractérisée en ce que** le passage de la position de sécurité vers la position de libération peut être effectuée par une action de l'utilisateur avec son pied.

3. Poussette selon l'une des revendications 1 et 2, **caractérisée en ce que** ledit élément de sécurité (82) et ledit organe d'actionnement (81) sont configurés et assemblés de façon que l'utilisateur puisse, dans une même séquence de mouvement d'un pied :
- déplacer ledit élément de sécurité (82) de la position de sécurité vers la position de libération, puis
- agir sur ledit organe d'actionnement (81) pour commander le déverrouillage.

4. Poussette selon l'une des revendications 1 à 3, **caractérisée en ce que** l'organe d'actionnement (81) et/ou l'élément de sécurité (82) sont montés pivotant sur le châssis (1).

5. Poussette selon l'une des revendications 1 à 4, **caractérisée en ce que** l'élément de sécurité (82) est monté de façon à passer de la position de libération à la position de sécurité sous l'effet de la gravité.

6. Poussette selon l'une des revendications 1 à 5, **caractérisée en ce que** l'élément de sécurité (82) recouvre au moins essentiellement l'organe d'actionnement (81) dans la position de sécurité.

7. Poussette selon l'une des revendications 1 à 6, **caractérisée en ce que** l'organe d'actionnement (81) est apte à agir sur un câble (C) relié à au moins un premier élément mobile de verrouillage (G) du châssis (1).

8. Poussette selon l'une des revendications 1 à 6, **caractérisée en ce que** l'organe d'actionnement (81) est apte à agir sur au moins un deuxième élément mobile de verrouillage (H) du châssis (1) coopérant avec au moins un élément commandant le pliage des roues arrière du châssis (1).

9. Poussette selon l'une des revendications 1 à 7, **caractérisée en ce que** l'organe d'actionnement (81) est solidaire de moyens élastiques (812) pour rappeler l'organe d'actionnement (81) vers une position de repos.

10. Poussette selon l'une des revendications 1 à 9, **caractérisée en ce que** l'organe d'actionnement (81) au pied est une pédale comprenant une surface d'appui du pied de l'utilisateur.

## Patentansprüche

1. Kinderwagen, welcher ein mit Rädern (61, 62, 63) versehenes Gestell (1) aufweist, das wenigstens eine entfaltete Stellung, welche einer Verwendungsstellung des Kinderwagens entspricht, und wenigstens eine gefaltete Stellung, welche einer Verstaustellung des Kinderwagens entspricht, einnehmen kann, wobei der Kinderwagen weiter Mittel zur Verriegelung des Gestells (1) in entfalteter Stellung und Steuermittel zur Entriegelung der Mittel zur Verriegelung, welche so ermöglichen, das Gestell (1) in die Verstaustellung zurückzuführen, aufweist, wobei die Steuermittel zur Entriegelung ein Fußbetätigungselement (81), das in dem unteren Bereich des Gestells (1) angeordnet ist, aufweisen, **dadurch gekennzeichnet, dass** die Steuermittel zur Entriegelung aufweisen:
ein bewegbares Sicherheitselement (82), welches dazu ausgelegt ist, den Zugang zum Betätigungselement (81) in einer ersten, sogenannten Sicherheitsstellung zu verhindern und den Zugang zum Betätigungselement (81) in einer zweiten, sogenannten Freigabestellung zu ermöglichen.

2. Kinderwagen nach Anspruch 1, **dadurch gekennzeichnet, dass** der Übergang von der Sicherheitsstellung in die Freigabestellung durch eine Handlung des Benutzers mit seinem Fuß ausgeführt werden kann.

3. Kinderwagen nach einem der Ansprüche 1 und 2, **dadurch gekennzeichnet, dass** das Sicherheitselement (82) und das Betätigungselement (81) derart ausgelegt und verbunden sind, dass der Benutzer in ein und derselben Bewegungssequenz eines Fußes:
- das Sicherheitselement (82) von der Sicherheitsstellung in die Freigabestellung verstellen, und ferner
- auf das Betätigungselement (81) zum Steuern der Entriegelung einwirken kann.

4. Kinderwagen nach einem der Ansprüche 1 bis 3, **dadurch gekennzeichnet, dass** das Betätigungselement (81) und/oder das Sicherheitselement (82) drehbar am Gestell (1) angebracht sind.

5. Kinderwagen nach einem der Ansprüche 1 bis 4, **dadurch gekennzeichnet, dass** das Sicherheitselement (82) derart angebracht ist, dass es von der Freigabestellung in die Sicherheitsstellung unter Einwirkung der Schwerkraft gelangt.

6. Kinderwagen nach einem der Ansprüche 1 bis 5, **dadurch gekennzeichnet, dass** das Sicherheitselement (82) das Betätigungselement (81) in der Sicherheitsstellung wenigstens im Wesentlichen überdeckt.

7. Kinderwagen nach einem der Ansprüche 1 bis 6, **dadurch gekennzeichnet, dass** das Betätigungselement (81) geeignet ist, auf ein Kabel (C), das wenigstens mit einem ersten, bewegbaren Entriegelungselement (G) des Gestells (1) verbunden ist, einzuwirken.

8. Kinderwagen nach einem der Ansprüche 1 bis 6, **dadurch gekennzeichnet, dass** das Betätigungselement (81) geeignet ist, auf ein zweites, bewegbares Entriegelungselement (H) des Gestells (1) einzuwirken, das wenigstens mit einem Element zusammenwirkt, das das Zusammenlegen der Räder hinter dem Gestell (1) steuert.

9. Kinderwagen nach einem der Ansprüche 1 bis 7, **dadurch gekennzeichnet, dass** das Betätigungselement (81) fest mit elastischen Mitteln (812) verbunden ist, um das Betätigungselement (81) in einer Ruhestellung vorzuspannen.

10. Kinderwagen nach einem der Ansprüche 1 bis 9, **dadurch gekennzeichnet, dass** das Fußbetätigungselement (81) eine Pedale ist, die eine Auflagefläche für den Fuß des Benutzers aufweist.

## Claims

1. Pushchair comprising a frame (1) provided with wheels (61, 62, 63), able to adopt at least one deployed position corresponding to a position of use of the pushchair and at least one folded position corresponding to a storage position of the pushchair, the pushchair further comprising means for locking the frame (1) in deployed position and means for controlling the unlocking of the means for locking as such making it possible to return the frame (1) to said storage position, said means for controlling the unlocking comprising an actuating member (81) with the foot located in the lower region of the frame (1),
**characterised in that** the means for controlling the unlocking comprise:
- a mobile safety element (82) configured to prevent access to the actuating member (81) in a first so-called safety position, and to allow access to the actuating member (81) in a second so-called release position.

2. Pushchair according to claim 1, **characterised in that** the passing from the safety position to the release position can be carried out by an action of the user with their foot.

3. Pushchair according to one of claims 1 and 2, **characterised in that** said safety element (82) and said actuating member (81) are configured and assembled in such a way that the user can, in the same movement sequence of a foot:
- displace said safety element (82) from the safety position to the release position, then
- act on said actuating member (81) in order to control the unlocking.

4. Pushchair according to one of claims 1 to 3, **characterised in that** the actuating member (81) and/or the safety element (82) are mounted pivoting on the frame (1).

5. Pushchair according to one of claims 1 to 4, **characterised in that** the safety element (82) is mounted in such a way as to pass from the release position to the safety position under the effect of gravity.

6. Pushchair according to one of claims 1 to 5, **characterised in that** the safety element (82) covers at least essentially the actuating member (81) in the safety position.

7. Pushchair according to one of claims 1 to 6, **characterised in that** the actuating member (81) is able to act on a cable (C) connected to at least one first mobile element (G) for locking the frame (1).

8. Pushchair according to one of claims 1 to 6, **characterised in that** the actuating member (81) is able to act on at least one second mobile element for locking (H) the frame (1) that cooperates with at least one element controlling the folding of the rear wheels of the frame (1).

9. Pushchair according to one of claims 1 to 7, **characterised in that** the actuating member (81) is integral with elastic means (812) in order to return the actuating member (81) to a rest position.

10. Pushchair according to one of claims 1 to 9, **characterised in that** the actuating member (81) with the foot is a pedal comprising a bearing surface for the foot of the user.
